# EUROPÄISCHE PATENTANMELDUNG

(11) **EP 0 976 613 A2**
(43) Veröffentlichungstag der Anmeldung: **02.02.2000**
(21) Anmeldenummer: 99113990.8
(22) Anmeldetag: 19.07.1999
(51) Int. Cl.: B60Q 1/44, B60Q 1/54

(54) **Warneinrichtung zur Anzeige einer Geschwindikeitsabnahme bei einem Kraftfahrzeug**

(30) Priorität: 30.07.1998 DE 29813592 U
(71) Anmelder: Peter Schmuck, 41849 Wassenberg (DE)
(72) Erfinder: Peter Schmuck, 41849 Wassenberg (DE)
(74) Vertreter: Paul, Dieter-Alfred, Dipl.-Ing.

(57) **Zusammenfassung**

Dargestellt und beschrieben wird eine Warneinrichtung (13) zur Anzeige einer Geschwindigkeitsabnahme bei einem Kraftfahrzeug, mit einer Anzeigeeinrichtung (21) für die Anzeige der Geschwindigkeitsabnahme und mit einer Signalerzeugungseinrichtung (14) für die Feststellung der Geschwindigkeitsabnahme und die Erzeugung eines die Anzeige bewirkenden Ansteuerungssignals, die dadurch gekennzeichnet ist, daß die Signalerzeugungseinrichtung eine Auswerteeinrichtung (14) aufweist, die einen Eingang (15) für die Verbindung mit einem Geschwindigkeitssensor (3) aufweist, der ein zur Geschwindigkeit des Kraftfahrzeuges proportionales Geschwindigkeitssignal erzeugt, wobei die Auswerteeinrichtung (14) derart ausgebildet ist, daß sie zeitlich beabstandete Geschwindigkeitssignale vergleicht und bei Feststellung einer zumindest wesentlichen Geschwindigkeitsabnahme ein erstes Ansteuerungssignal für die Bewirkung einer ersten Anzeige erzeugt.

## Beschreibung

Die Erfindung betrifft eine Warneinrichtung zur Anzeige einer Geschwindigkeitsabnahme bei einem Kraftfahrzeug, mit einer Anzeigeeinrichtung zur Anzeige der Geschwindigkeitsabnahme und mit einer Signalerzeugungseinrichtung für die Feststellung der Geschwindigkeitsabnahme und die Erzeugung eines die Anzeige bewirkendes Ansteuerungssignals.

Eine solche Warneinrichtung ist aus der DE 39 36 477 A1 und der DE 91 08 827 U1 bekannt. Um auch Bremsvorgänge anzuzeigen, die nicht auf der Betätigung der im Kraftfahrzeug vorhandenen Bremsanlage beruhen, werden Signalerzeugungseinrichtungen vorgeschlagen, die Beschleunigungsensoren aufweisen. Bei einer Negativbeschleunigung, d.h. bei Verlangsamung der Geschwindigkeit des Fahrzeuges, erzeugt der Beschleunigungsensor ein Signal, das die Anzeigeeinrichtung in der Weise ansteuert, daß eine Leuchte in einer Warnfarbe, beispielsweise rot, aufleuchtet, und zwar unabhängig davon, ob die Geschwindigkeitsabnahme nur auf einer Zurücknahme der Leistungsabgabe des Motors beruht oder auf einer Betätigung der Bremsanlage. Auf diese Weise wird der nachfolgende Verkehr auch schon dann gewarnt, wenn der Fahrer des mit einer solchen Warneinrichtung ausgestatteten Fahrzeuges das Gaspedal zurücknimmt und deshalb die Geschwindigkeit abnimmt. Der nachfolgende Verkehr kann sich frühzeitig darauf einstellen und die Geschwindigkeit so anpassen, daß der Abstand erhalten bleibt.

Nachteilig bei dieser Warneinrichtung ist, daß Beschleunigungssensoren der beschriebenen Art nur bei horizontaler Stellung des Fahrzeuges korrekt funktionieren. Beschleunigungssensoren reagieren nämlich auch bei Schrägstellung des Fahrzeuges, wie sie beispielsweise bei Bergund Talfahrt auftritt. Außerdem sind Beschleunigungssensoren nicht empfindlich genug, um geringe Geschwindigkeitsänderungen zu erfassen. Zudem sind sie in ihrem Aufbau kompliziert und deshalb teuer.

Daneben sind Warneinrichtungen bekannt, die Sensoren zur Erfassung der Stellung des Gaspedals oder daran angeschlossener Teile aufweisen (vgl. DE 42 13 148 A1; DE-OS 27 39 911; DE 40 20 464 A1; DE 88 00 236 U1; DE 92 05 583 U1; DE 92 10 079 U1; DE 94 09 511 U1; DE 295 10 493 U1; DE 31 09 753 A1; DE 39 35 00 A1). Die Erfassung der Gaspedalstellung gibt jedoch keine eindeutige Information über den jeweiligen Fahrzustand des Kraftfahrzeuges, d.h. darüber, ob eine Geschwindigkeitszunahme oder -abnahme vorliegt. Stellt der nachfolgende Verkehr fest, daß die Anzeige schon aufleuchtet, wenn noch gar keine Geschwindigkeitsabnahme vorliegt, besteht die Gefahr, daß die Anzeige nicht ernst genommen wird. Der Warneffekt träte nicht ein.

Der Erfindung liegt die Aufgabe zugrunde, eine Warneinrichtung so auszubilden, daß sie bei allen Fahrzeugzuständen eine Geschwindigkeitsabnahme exakt erfaßt und anzeigt. Weiteres Ziel ist, die Warneinrichtung so auszubilden, daß ihre Produktionskosten vergleichsweise gering sind.

Diese Aufgabe wird erfindungsgemäß dadurch gelöst, daß die Signalerzeugungseinrichtung eine Auswerteeinrichtung aufweist, die einen Eingang für die Verbindung mit einem Geschwindigkeitssensor aufweist, der ein zur Geschwindigkeit des Kraftfahrzeuges proportionales Geschwindgkeitssignal erzeugt, wobei die Auswerteeinrichtung derart ausgebildet ist, daß sie zeitlich beabstandete Geschwindigkeitssignale vergleicht und bei Feststellung einer zumindest wesentlichen Geschwindigkeitsabnahme ein erstes Ansteuerungssignal für die Bewirkung einer ersten Anzeige erzeugt.

Grundgedanke der Erfindung ist es, mit Hilfe der Signalerzeugungseinrichtung die Geschwindigkeit des Kraftfahrzeuges direkt zu erfassen, indem zur Geschwindigkeit des Kraftfahrzeuges proportionale Geschwindigkeitssignale derart verarbeitet werden, daß eine Geschwindigkeitsabnahme festgestellt und darauf basierend ein Ansteuerungssignal für die Anzeige erzeugt wird. Eine solche Warneinrichtung hat den Vorzug, daß sie den tatsächlichen Fahrzustand des Fahrzeuges direkt ermittelt und damit unabhängig ist von der jeweiligen Lage des Fahrzeuges oder anderen Einflüssen. Die Anzeige wird immer nur dann angesprochen, wenn tatsächlich eine Geschwindigkeitsabnahme vorliegt. Der nachfolgende Verkehr erhält eine exakte Information darüber, ob das vorausfahrende, mit der erfindungsgemäßen Warneinrichtung ausgerüstete Fahrzeug beschleunigt oder eine konstante Geschwindigkeit einhält oder ob die Geschwindigkeit abnimmt und somit die Gefahr besteht, daß sich der Abstand zu diesem Fahrzeug verringert.

Sofern das Kraftfahrzeug nicht schon einen Geschwindigkeitssensor aufweist, ist nach der Erfindung vorgesehen, daß die Warneinrichtung einen eigenen Geschwindigkeitssensor hat, der mit dem Eingang der Anzeigeeinrichtung verbunden ist. Hierfür kommen insbesondere Radsensoren in Frage, wie sie heute für Antiblockiersysteme und auch für die Tachoanzeige verwendet werden. Da die meisten Kraftfahrzeuge mittlerweile Antiblockiereinrichtungen mit Geschwindigkeitssensoren aufweisen und dessen Geschwindigkeitssignale auch für die Tachoanzeige verwendet werden, ist es für die erfindungsgemäße Warneinrichtung nicht erforderlich, einen zusätzlichen Geschwindigkeitssensor vorzusehen. Die Warneinrichtung hat dann zweckmäßigerweise eine mit dem Eingang der Auswerteeinrichtung verbindbare Abgriffseinrichtung, über die eine Verbindung mit dem am Kraftfahrzeug ohnehin vorhandenen Geschwindigkeitssensor herstellbar ist. Auf diese Weise werden Informationen verwertet, die in der Bordelektronik des Kraftfahrzeuges schon vorliegen und folglich auf einfache Weise abgegriffen und für die Zwecke der Warneinrichtung verwertet werden können.

Der Abgriff kann dann in allen Teilen vorgenommen werden, die Geschwindigkeitssignale verarbeiten, insbesondere der Bordelektronik, dem Antiblockiersystem, einem eventuellen Antischleudersystem oder dem Tachometer. Besonders eignet sich der Abgriff auf der Zuleitung zu oder am heute fast immer eingebauten Radio, denn die meisten Radios haben eine Lautstärkesteuerung, die mit Geschwindigkeitssignalen versorgt wird und darauf basierend die Lautstärke mit zunehmender Geschwindigkeit anhebt. Der Abgriff der Geschwindigkeitssignale ist deshalb besonders zweckmäßig, weil er an einem nicht sicherheitsrelevanten Teil der Bordelektronik erfolgt und demgemäß eventuelle Störungen, die von der Warneinrichtung ausgehen könnten, keinen Einfluß auf die Sicherheit des Fahrzeuges haben.

Nach einem weiteren Merkmal der Erfindung ist vorgesehen, daß die Auswerteeinrichtung so ausgebildet ist, daß die Abgabe eines Ansteuerungssignals unterhalb einer bestimmten Mindestgeschwindigkeit unterdrückt wird. Auf diese Weise wird eine Warnanzeige in Geschwindigkeitsbereichen vermieden, wo sie kaum Nutzen bringt, wie beispielsweise unterhalb von 10 km/h.

Um kurzfristige Signalschwankungen auszugleichen, ist es zweckmäßig, daß die Auswerteeinrichtung derart ausgebildet ist, daß jeweils mehrere zeitlich beabstandete Geschwindigkeitssignale einer Durchschnittsberechnung unterworfen und dann jeweils die sich hieraus ergebenden Durchschnittsgeschwindigkeitssignale miteinander verglichen werden. Je nach Anzahl der für eine Durchschnittsberechnung herangezogenen Geschwindigkeitssignale können kurzfristige Schwankungen geglättet werden und gehen dann in den Vergleich nicht oder nur wenig ein.

Alternativ oder besser noch in Kombination mit einer solchen Erzeugung von Durchschnittsgeschwindigkeitssignalen sieht die Erfindung ferner vor, daß die Auswerteeinrichtung derart ausgebildet ist, daß jeweils Gruppen von Geschwindigkeitssignalen bzw. Durchschnittsgeschwindigkeitssignalen gespeichert werden, wobei innerhalb der Gruppen jeweils das zeitlich älteste Geschwindigkeitssignal durch das zeitlich jüngste Geschwindigkeitssignal ersetzt wird, und daß die Gruppen jeweils einer Mittelwertberechnung unterworfen und die sich hieraus ergebenenden Mittelwertgeschwindigkeitssignale miteinander verglichen werden. Hierdurch entsteht eine Art Trendberechnung, die die Auswertung noch unempfindlicher gegenüber kurzfristigen Signalschwankungen macht, insbesondere wenn der Trendberechnung eine Durchschnittsberechnung zum Zwecke der Erzeugung eines Durchschnittsgeschwindigkeitssignals vorangeht. Die hierdurch bedingte Trägheit des Systems kann durch die Anzahl der jeweils in einer Gruppe gespeicherten Geschwindigkeitssignale entsprechend den jeweiligen Anforderungen angepaßt werden.

Nach einem weiteren Merkmal der Erfindung ist vorgeschlagen, daß die Auswerteinrichtung mehrere parallel arbeitende Module aufweist, in denen Geschwindigkeitssignale bzw. Durchschnittsgeschwindigkeitssignale bzw. Mittelwertgeschwindigkeitssignale unterschiedlicher zeitlicher Abstände miteinander verglichen werden, wobei ein Ansteuerungssignal für die Anzeigeeinrichtung erzeugt wird, wenn schon in einem Modul eine Geschwindigkeitsabnahme erfaßt wird. Auf diese Weise können mit einem Modul, bei dem die Geschwindigkeitssignale in engem zeitlichem Abstand verglichen werden, sehr schnelle Geschwindigkeitsänderungen sofort erfaßt werden, während in dem anderen Modul, in dem Geschwindigkeitssignale mit zeitlich relativ großem Abstand - bis hin zu mehreren Sekunden - verglichen werden, auch langsame, schleichende Geschwindigkeitsänderungen erfaßt werden. In beiden Fällen wird die Anezigeeinrichtung angesteuert, und es wird eine Anzeige erzeugt. Es hat sich als zweckmäßig erwiesen, fünf Module vorzusehen, die jeweils zeitlich unterschiedlich beabstandete Geschwindigkeitssignale überprüfen.

Die Erfindung sieht des weiteren vor, daß die Auswerteeinrichtung derart ausgebildet ist, daß die Differenz der zu vergleichenden Geschwindigkeitssignale bzw. Durchgangsgeschwindigkeitssignale bzw. Mittelwertgeschwindigkeitssignale so ins Verhältnis zur tatsächlichen Geschwindigkeit gesetzt wird, daß die Geschwindigkeitsabnahme um so größer sein muß, je höher die tatsächliche Geschwindigkeit ist, um ein erstes Ansteuerungssignal zu erzeugen. Auf diese Weise wird berücksichtigt, daß eine bestimmte Geschwindigkeitsänderung im unteren Geschwindigkeitsbereich eine höhere Wertigkeit hat als im oberen Geschwindigkeitsbereich, da sie im ersteren Fall prozentual mehr ins Gewicht fällt als im letzteren Fall.

Die Erfindung sieht in zweckmäßiger Ausgestaltung ferner vor, daß die Auswerteeinrichtung derart ausgebildet ist, daß sie auch eine konstante Geschwindigkeit und/oder eine Geschwindigkeitszunahme erfaßt und daß in mindestens einem der Fälle ein zweites, von dem ersten Ansteuerungssignal verschiedenes Ansteuerungssignal erzeugt wird, wobei dieses zweite Ansteuerungssignal eine zweite, von der ersten Anzeige verschiedene Anzeige bewirkt. Aufgrund dieser Ausbildung der Auswerte- und Anzeigeeinrichtung erhält der nachfolgende Verkehr zusätzliche Informationen über den Fahrzustand des Kraftfahrzeuges und kann sich noch besser an diesen Fahrzustand anpassen. Dabei kann es ausreichend sein, wenn nur einer der Fahrzustände konstante Geschwindigkeit oder Geschwindigkeitszunahme zu einer zweiten Anzeige führt, beispielsweise nur der Fahrzustand konstante Geschwindigkeit. Die Erfassung dieser Fahrzustände kann in derselben, vorbeschriebenen Weise wie bei der Erfassung einer Geschwindigkeitsabnahme erfolgen.

Die Anzeigeeinrichtung kann als Zusatzanzeigeeinrichtung zu den schon vorhandenen Signaleinrichtungen des Fahrzeuges wie Bremssignaleinrichtung, Rücklicht sowie Richtungsblinker ausgebildet sein. Eine solche Ausbildung hat den Vorzug, daß unabhängig von den Signaleinrichtungen des Fahrzeuges Anzeigen im vorbeschriebenen Sinne erzeugt werden können, beispielsweise indem eine Anzeigeleuchte so angesteuert wird, daß sie mit unterschiedlicher Intensität oder unterschiedlicher Frequenz aufleuchtet, oder indem mehrere Anzeigeleuchten vorhanden sind, die unterschiedliche Farben abgeben. Alternativ dazu, aber auch in Kombination mit einer zusätzlichen Anzeigeeinrichtung kann die Anzeigeeinrichtung auch die Bremssignaleinrichtung des Kraftfahrzeuges einschließen, wobei das erste Ansteuerungssignal derart ausgebildet ist, daß mit der Bremssignaleinrichtung eine charakteristische erste Anzeige erzeugt wird. Für eine Anzeige bei einer Geschwindigkeitsabnahme wird also in diesem Fall die Bremssignaleinrichtung herangezogen, so daß - wenn nur eine solche Anzeige erzeugt werden soll - keine zusätzliche Anzeigeeinrichtung erforderlich ist. Dabei ist unter einer charakteristischen Anzeige eine solche zu verstehen, die sich in Intensität und Verhalten wesentlich von einer Anzeige unterscheidet, wie sie bei typischen Bremsvorgängen, auch bei sogenannten "stotternden" Bremsvorgängen, erscheint. Dies kann zum Beispiel in der Weise geschehen, daß die Anzeige eine wesentlich geringere Intensität als bei einem Bremsvorgang hat oder daß eine bestimmte Blinkfrequenz erzeugt wird, welche sich deutlich von Bremsanzeigen unterscheidet. Hierfür kommen sehr schnelle Frequenzen, welche selbst bei Stotterbremsvorgängen nicht auftreten können, oder spot- bzw. blitzlichtartiges Blinken in Frage. Auch ein langsames Aufund Abschwellen der Leuchtintensität mit oder ohne Pausen würde sich deutlich von einer Bremsanzeige unterscheiden. Alle vorgenannten Maßnahmen können auch miteinander kombiniert werden, um die Anzeige einer Geschwindigkeitsabnahme ohne Bremsvorgang von der mit Bremsvorgang für den nachfolgenden Verkehr erkennbar zu machen.

Alternativ dazu kann vorgesehen sein, daß die Auswerteeinrichtung so ausgebildet ist, daß sie einen Eingang für die Verbindung mit einer Bremssignaleinrichtung der Bremsanlage des Kraftfahrzeuges hat und daß bei Empfang eines Ansteuerungssignals für die Bremssignaleinrichtung ein drittes, von dem ersten und ggf. dem zweiten unterschiedliches Ansteuerungssignal für die Anzeigeeinrichtung erzeugt wird, wobei dieses Ansteuerungssignal eine dritte, von der ersten und ggf. zweiten verschiedene Anzeige erzeugt. Grundgedanke dieser Ausführungsform ist es, das Ansteuerungssignal für die Bremsleuchten mit in die erfindungsgemäße Warneinrichtung einzubeziehen, und zwar in der Weise, daß in deren Anzeigeeinrichung eine Bremsanzeige erzeugt wird, wobei die Warneinrichtung dann als drittes Bremslicht fungiert. Die Bremsanzeige bzw. dritte Anzeige kann zusätzlich zu der ersten Anzeige erfolgen. Um eine verwechslungssichere Anzeige zu gewährleisten, ist es jedoch zweckmäßiger, daß die Auswerteeinrichtung derart ausgebildet ist, daß über die Ansteuerungssignale immer nur eine spezifische Anzeige bewirkt wird, also bei einer Anzeige alle übrigen Anzeigen unwirksam sind.

Sofern mehrere Anzeigen vorgesehen sind, kann die Anzeige über unterschiedliche Farben abgebende Leuchten erfolgen. Dabei empfehlen sich für die dritte Anzeige (Bremsanzeige) eine rote Farbe, für die zweite Anzeige (Geschwindigkeitszunahme und/oder konstante Geschwindigkeit) eine grüne Farbe und für die erste Anzeige (Geschwindigkeitsabnahme) eine gelbe Farbe, da diese Farben aufgrund der Verwendung bei Verkehrsampeln eine dem jeweiligen Fahrzustand entsprechende Symbolik vermitteln. Die Leuchten können so ausgebildet sein, daß sie Lampen unterschiedlicher Farben bei klarem Leuchtfenster oder klare Lampen bei mehrfarbigen Leuchtfenstern aufweisen. Als Lampen kommen herkömmliche Glühlampen oder aber auch LED's in Frage.

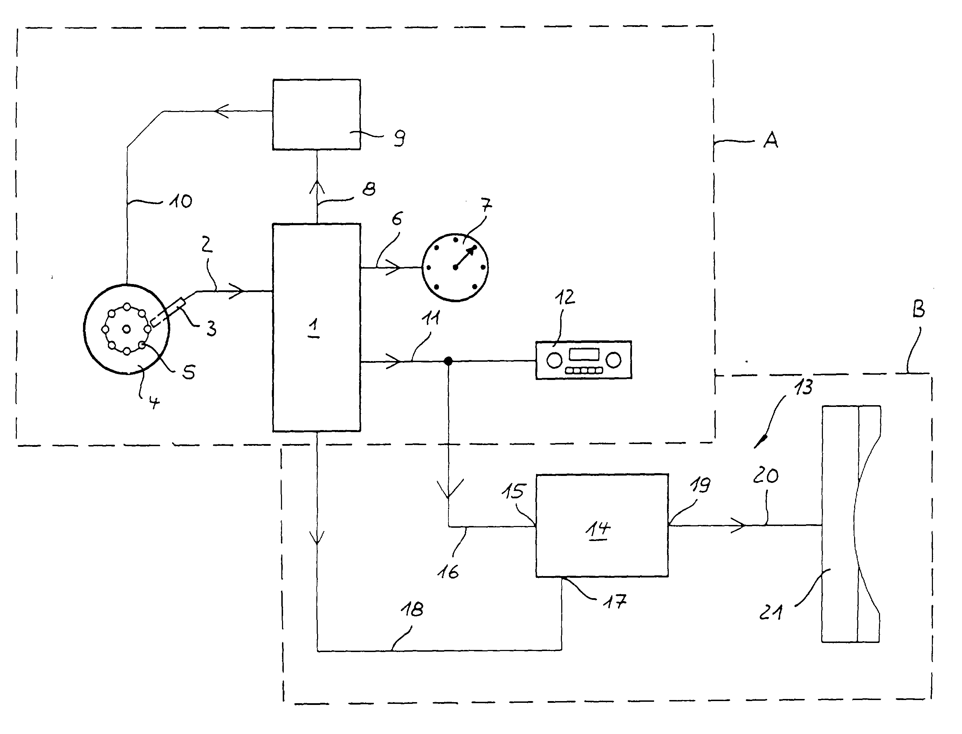

In der Zeichnung ist die Erfindung anhand eines Ausführungsbeispiels näher veranschaulicht, die zum einen Teile des Kraftfahrzeuges und zum anderen die Warneinrichtung in Form eines Blockschaltbildes zeigt.

In dem gestrichelt eingerahmten Kasten A befinden sich die normalerweise in einem heutigen Kraftfahrzeug vorhandenen, nachstehend näher beschriebenen Teile. Zentraler Bestandteil ist die Bordelektronik 1, die für viele elektronisch gesteuerte Teile des Kraftfahrzeuges zuständig ist, so auch für diejenigen Teile, die Geschwindigkeitssignale erhalten, also Signale, die proportional zu der tatsächlichen Geschwindigkeit des Kraftfahrzeuges sind. Hierzu ist die Bordelektronik 1 über eine Leitung 2 mit einem Geschwindigkeitssensor 3 verbunden, der in der Nähe eines der Räder 4 am ungefederten Teil der Radaufängung befestigt ist und mit einer Lochscheibe 5 am Rad selbst zusammenwirkt. Durch die Relativbewegung zwischen Lochscheibe 5 und Geschwindigkeitssensor 3 werden in letzterem Impulse erzeugt, deren zeitlicher Abstand proportional zu der Umdrehungsgeschwindigkeit des Rades 4 ist und die in der Bordelektronik 1 zu Geschwindigkeitssignalen vorzugsweise in digitalisierter Form ausgearbeitet werden.

Über eine Leitung 6 gehen die Geschwindigkeitssignale zu einem Tachometer 7, um dort die tatsächliche Geschwindigkeit des Kraftfahrzeuges anzuzeigen. Über eine Leitung 8 werden die Geschwindigkeitssignale auf ein Antiblockiersystem (ABS) 9 übertragen, das zusätzlich mit einem Antischleudersystem gekoppelt sein kann. Mittels einer Hydraulikleitung 10 wird der jeweilige Bremsdruck auf den Bremssattel am Rad 4 übertragen.

Eine weitere, Geschwindigkeitssignale übertragende Leitung 11 führt zu einem Autoradio 12. Dieses Autoradio 12 hat eine Lautstärkesteuerung, die die Lautstärke in Abhängigkeit von dem Geschwindigkeitssignal in der Weise anpaßt, daß die Lautstärke des Autoradios 12 umso größer ist, je höher die Geschwindigkeit ist, um hierdurch dem sich bei höherer Geschwindigkeit verstärkenden Geräuschpegel anzupassen.

Der gestrichelt abgegrenzte zweite Kasten B schließt eine Warneinrichtung 13 ein. Zentraler Bestandteil dieser Warneinrichtung ist eine Auswerteeinrichtung 14, die eine Mikroprozessor- oder Mikrocontroller-Elektronik aufweist. Die Auswerteeinrichtung 14 hat einen Eingang 15, der über eine Abgriffleitung 16 mit der Leitung 11 zu dem Autoradio 12 verbunden ist. Über die Abgriffleitung 16 erhält die Auswerteeinrichtung 14 parallel zu dem Autoradio 12 Geschwindigkeitssignale, die dann in der Auswerteeinrichtung 14 verarbeitet werden.

Die Auswerteeinrichtung 14 weist einen zweiten Eingang 17 auf, der über die Leitung 18 mit der Bordelektronik 1 verbunden ist. Über diese Leitung 18 und den Eingang 17 erhält die Auswerteeinrichtung 14 Bremssignale, d.h. Signale, die die Bordelektronik 1 bei Betätigung der Fahrzeugbremse erzeugt, damit die Bremslichter aufleuchten.

Die Auswerteeinrichtung 14 hat zudem einen Ausgang 19, der über die Anzeigeleitung 20 mit der Anzeigeeinrichtung 21 verbunden ist. Die Anzeigeeinrichtung 21 ist dazu bestimmt, im Heckbereich des Kraftfahrzeuges, beispielsweise hinter der Heckscheibe, so angebracht zu werden, daß deren hier nicht näher dargestellten Anzeigeleuchten nach hinten abstrahlen. Die Anzeigeeinrichtung 21 hat jeweils eine grüne Farbe, gelbe Farbe und rote Farbe abgebende Anzeigeleuchte, wobei selbstverständlich für jede Farbe auch mehrere Leuchten vorhanden sein können. Die Anzeigeleitung 20 kann aus der Anzahl der Anzeigeleuchten entsprechenden Einzelleitungen bestehen, die innerhalb der Auswerteeinrichtung 14 selektiert werden. Sie kann jedoch eine Einzelleitung sein, über die entsprechende Signale an die Anzeigeeinrichtung 21 gibt, die dann die Stromzufurh zu derjenigen Anzeigeleuchte schaltet, die mit dem entsprechenden Signal korrespondiert.

Die Verarbeitung der in der Auswerteeinrichtung 14 eingehenden Geschwindigkeits- und Bremssignale geschieht in der oben näher beschriebenen Art, so daß hier nur kurz darauf eingegangen wird. Jeweils eine bestimmte Anzahl von Geschwindigkeitssignalen werden einer Durchschnittsberechnung unterworfen, um kurzfristige Signalschwankungen und -störungen auszugleichen. Anschließend werden diese Durchschnittsgeschwindigkeitssignale einer Trendberechnung unterzogen, bei der zwei Gruppen mit jeweils einer bestimmten Anzahl von Durchschnittsgeschwindigkeitssignalen gebildet werden und innerhalb dieser Gruppen jeweils das zeitlich älteste Durchschnittsgeschwindigkeitssignal durch das zeitlich jüngste Geschwindigkeitssignal ersetzt wird, wobei nach jedem Ersetzungsvorgang eine Mittelwertbildung in beiden Gruppen vorgenommen und die sich hieraus ergebenden Mittelwertgeschwindigkeitssignale miteinander verglichen werden. Durch diese Art der Signalverarbeitung erhält das System eine Trägheit, die es stabil macht und Störungen sowie kurzfristige Signalschwankungen einebnet.

Je nach Auslegung kann die Signalverarbeitung immer noch so schnell sein, daß zwar relativ starke Geschwindigkeitsänderungen erfaßt werden, nicht jedoch "schleichende" Geschwindigkeitsänderungen, also Änderungen, die sehr langsam vonstatten gehen. Um auch solche Geschwindigkeitsänderungen zu erfassen, weist die Auswerteeinrichtung 14 insgesamt fünf Programmodule auf. Während einer der Programmodule sämtliche Geschwindigkeitssignale verarbeitet, verwerten die anderen Programmodule Geschwindigkeitssignale mit immer größerem zeitlichen Abstand zueinander, also immer weniger werdende Geschwindigkeitssignale. Hierdurch verlängert sich die Verarbeitungsdauer, wobei das Programmodul mit der längsten Verarbeitungsdauer Geschwindigkeitssignale verarbeitet, die einen zeitlichen Abstand von mehreren Sekunden haben. Auf diese Weise werden auch Geschwindigkeitsänderungen erfaßt, die erst nach mehreren Sekunden zu einer Änderung der Geschwindigkeitssignale und damit beim Vergleich zu einer Differenz führen. Über die fünf Programmodule können somit sowohl starke Geschwindigkeitsschwankungen als auch sehr langsame Geschwindigkeitänderungen erfaßt, wobei ein Ansteuerungssignal über die Anzeigeeinrichtung 21 erzeugt wird, wenn auch nur in einem der Programmodule eine Geschwindigkeitsänderung erfaßt wird.

In der Auswerteeinrichtung 14 werden drei Ansteuerungssignale erzeugt. Ergibt sich bei der Verarbeitung der Geschwindigkeitssignale eine Geschwindigkeitsabnahme, wird ein erstes Ansteuerungssignal gebildet, das das Aufleuchten einer gelben Anzeigeleuchte in der Anzeigeeinrichtung 21 bewirkt. Da gelb wegen seiner entsprechenden Verwendung in Verkehrsampeln und an Warntafeln allgemein als Warnleuchte verstanden wird, wird dem nachfolgenden Verkehr signalisiert, daß das mit der Warneinrichtung 13 versehene Kraftfahrzeug seine Geschwindigkeit verlangsamt, wenn auch nicht bewirkt durch die Betätigung der Bremsanlage. Der nachfolgende Verkehr kann dann selbst durch Zurücknahme des Gaspedals für eine entsprechende Anpassung unter Beibehaltung oder sogar Vergrößerung des Abstandes zu dem vorausfahrenden Kraftfahrzeug vornehmen.

Fährt das mit der Warneinrichtung 13 versehene Kraftfahrzeug mit konstanter Geschwindigkeit oder wird dessen Geschwindigkeit erhöht, also beschleunigt es, wird dies ebenfalls durch die Signalverarbeitung in der Auswerteeinrichtung 14 erfaßt und ein zweites Ansteuerungssignal erzeugt, das das Aufleuchten einer grünen Anzeigeleuchte in der Anzeigeeinrichtung 21 bewirkt. Die Farbe grün signalisiert aufgrund ihrer entsprechenden Verwendung auch bei Verkehrsampeln, daß sich das Kraftfahrzeug zumindest mit gleichmäßiger Geschwindigkeit bewegt, was für den nachfolgenden Verkehr eine zusätzliche Information gibt.

Wird die Geschwindigkeit des Kraftfahrzeuges mit Hilfe der Bremsanlage herabgesetzt, erhält die Auswerteeinrichtung 14 über die Leitung 18 ein Signal, das mit dem Signal für das Anschalten der Bremsleuchten korrespondiert. Dieses Signal erzeugt in der Auswerteeinrichtung 14 ein drittes Ansteuerungssignal, das Priorität vor dem ersten Ansteuerungssignal hat und das Aufleuchten einer roten Anzeigeleuchte in der Anzeigeeinrichtung 21 bewirkt. Das Aufleuchten der gelben Anzeigeleuchte wird unterdrückt oder sie wird bei Einschaltung der roten Anzeigeleuchte ausgeschaltet. Die Anzeigeeinrichtung 21 arbeitet dann als dritte Bremsleuchte zusammen mit den beiden vorhandenen Bremsleuchten.

## Patentansprüche

1. Warneinrichtung (13) zur Anzeige einer Geschwindigkeitsabnahme bei einem Kraftfahrzeug, mit einer Anzeigeeinrichtung (21) für die Anzeige der Geschwindigkeitsabnahme und mit einer Signalerzeugungseinrichtung (14) für die Feststellung der Geschwindigkeitsabnahme und die Erzeugung eines die Anzeige bewirkenden Ansteuerungssignals, **dadurch gekennzeichnet,** daß die Signalerzeugungseinrichtung eine Auswerteeinrichtung (14) aufweist, die einen Eingang (15) für die Verbindung mit einem Geschwindigkeitssensor (3) aufweist, der ein zur Geschwindigkeit des Kraftfahrzeuges proportionales Geschwindigkeitssignal erzeugt, wobei die Auswerteeinrichtung (14) derart ausgebildet ist, daß sie zeitlich beabstandete Geschwindigkeitssignale vergleicht und bei Feststellung einer zumindest wesentlichen Geschwindigkeitsabnahme ein erstes Ansteuerungssignal für die Bewirkung einer ersten Anzeige erzeugt.

2. Warneinrichtung nach Anspruch 1, **dadurch gekennzeichnet,** daß die Warneinrichtung einen eigenen Geschwindigkeitssensor aufweist, der mit dem Eingang der Auswerteeinrichtung verbunden ist.

3. Warneinrichtung nach Anspruch 1, **dadurch gekennzeichnet,** daß eine mit dem Eingang (15) der Auswerteeinrichtung (14) verbindbare Abgreifeinrichtung (16) vorgesehen ist, über die eine Verbindung mit dem am Kraftfahrzeug ohnehin vorhandenen Geschwindigkeitssensor (3) herstellbar ist.

4. Warneinrichtung nach Anspruch 3, **dadurch gekennzeichnet,** daß die Abgriffeinrichtung (16) so ausgebildet ist, daß eine Verbindung zu einem Teil einer Bordelektronik (1), eines Tachometers (7), einer Antiblockiereinrichtung (9) und/oder eines Radios (12) des Kraftfahrzeuges oder dessen bzw. deren Zuleitung herstellbar ist.

5. Warneinrichtung nach einem der Ansprüche 1 bis 4, **dadurch gekennzeichnet,** daß die Auswerteeinrichtung (14) so ausgebildet ist, daß die Erzeugung und/oder die Abgabe eines Ansteuerungssignals unterhalb einer bestimmten Mindestgeschwindigkeit unterdrückt wird.

6. Warneinrichtung nach einem der Ansprüche 1 bis 5, **dadurch gekennzeichnet,** daß die Auswerteeinrichtung (14) derart ausgebildet ist, daß jeweils mehrere, zeitlich beabstandete Geschwindigkeitssignale einer Durchschnittsberechnung unterworfen und dann die jeweils sich hieraus ergebenden Durchschnittsgeschwindigkeitssignale miteinander verglichen werden.

7. Warneinrichtung nach einem der Ansprüche 1 bis 6, **dadurch gekennzeichnet,** daß die Auswerteeinrichtung (14) derart ausgebildet ist, daß jeweils Gruppen von Geschwindigkeitssignalen bzw. Durchschnittsgeschwindigkeitssignalen gespeichert werden, wobei innerhalb der Gruppen jeweils das zeitlich älteste Geschwindigkeitssignal bzw. Durchgeschwindigkeitssignal durch das zeitlich jüngste Geschwindigkeitssignal bzw. Durchschnittsgeschwindigkeitssignal ersetzt wird, und daß die Gruppen jeweils einer Mittelwertberechnung unterworfen und die sich hieraus ergebenden Mittelwertgeschwindigkeitssignale miteinander verglichen werden.

8. Warneinrichtung nach einem der Ansprüche 1 bis 7, **dadurch gekennzeichnet,** daß die Auswerteeinrichtung (14) mehrere, parallel arbeitende Module aufweist, in denen Geschwindigkeitssignale bzw. Durchgeschwindigkeitssignale bzw. Mittelwertgeschwindigkeitssignale unterschiedlicher zeitlicher Abstände miteinander verglichen werden, wobei das erste Ansteuerungssignal erzeugt wird, wenn schon in einem der Module eine Geschwindigkeitsabnahme erfaßt wird.

9. Warneinrichtung nach einem der Ansprüche 1 bis 8, **dadurch gekennzeichnet,** daß die Auswerteeinrichtung (14) derart ausgebildet ist, daß die Differenz der zu vergleichenden Geschwindigkeitssignale bzw. Durchschnittsgeschwindigkeitssignale bzw. Mittelwertgeschwindigkeitssignale so ins Verhältnis zur tatsächlichen Geschwindigkeit des Kraftfahrzeugs gesetzt wird, daß die Geschwindigkeitsabnahme um so größer sein muß, je höher die tatsächliche Geschwindigkeit ist, um ein erstes Ansteuerungssignal zu erzeugen.

10. Warneinrichtung nach einem der Ansprüche 1 bis 9, **dadurch gekennzeichnet,** daß die Auswerteeinrichtung (14) derart ausgebildet ist, daß sie auch eine konstante Geschwindigkeit und/oder eine Geschwindigkeitszunahme erfaßt, und daß im mindestens einer dieser Fahrzustände ein zweites, von dem ersten Ansteuerungssignal verschiedenes Ansteuerungssignal erzeugt wird, wobei dieses zweite Ansteuerungssignal eine zweite, von der ersten Anzeige verschiedene Anzeige bewirkt.

11. Warneinrichtung nach einem der Ansprüche 1 bis 10, **dadurch gekennzeichnet,** daß die Anzeigeeinrichtung unterschiedliche Farben abgebende Anzeigeleuchten aufweist.

12. Warneinrichtung nach einem der Ansprüche 1 bis 11, **dadurch gekennzeichnet,** daß die Anzeigeeinrichtung (21) die Bremssignaleinrichtung des Kraftfahrzeuges einschließt und daß das erste Ansteuerungssignal derart ausgebildet ist, daß mit der Bremssignaleinrichtung eine charakteristische erste Anzeige erzeugt wird.

13. Warneinrichtung nach einem der Ansprüche 1 bis 11, **dadurch gekennzeichnet,** daß die Auswerteeinrichtung (14) einen Eingang (17) für die Verbindung mit der Bremssignaleinrichtung der Bremsanlage des Kraftfahrzeuges hat und daß bei Eingang eines Ansteuerungssignals für die Bremssignaleinrichtung ein drittes, von dem ersten und ggf. dem zweiten unterschiedliches Ansteuerungssignal für die Anzeigeeinrichtung (21) erzeugt wird, wobei dieses Ansteuerungssignal eine dritte, von der ersten und ggf. zweiten verschiedene Anzeige erzeugt.

14. Warneinrichtung nach Anspruch 13, **dadurch gekennzeichnet,** daß die Auswerteeinrichtung (14) derart ausgebildet ist, daß über die Ansteuerungssignale immer nur eine spezifische Anzeige bewirkt wird.
